# FASCICULE DE BREVET EUROPEEN

(11) **EP 3 645 232 B1**
(45) Date de publication et mention de la délivrance du brevet: **14.12.2022**
(21) Numéro de dépôt: 18750240.6
(22) Date de dépôt: 28.06.2018
(51) Int. Cl.: B29C 33/38, B29C 33/40, C08L 83/04, B29K 83/00, C08G 77/16, C08K 5/17, C08K 5/5415, C08K 5/5419, C08K 5/5425

(54) **PROCÉDÉ DE FABRICATION DE MOULES EN ÉLASTOMÈRE SILICONE**
VERFAHREN ZUR HERSTELLUNG VON SILIKONELASTOMERFORMEN
METHOD FOR PRODUCING SILICONE ELASTOMER MOULDS

(30) Priorité: 29.06.2017 FR 1700692
(43) Date de publication de la demande: 06.05.2020
(73) Titulaire: Elkem Silicones France S.A.S., 69003 Lyon (FR)
(72) Inventeur: MARIOT, David, 69008 Lyon (FR); MALIVERNEY, Christian, 69690 Saint Julien sur Bibost (FR); PELLE, Aurélie, 38530 Pontcharra (FR)
(74) Mandataire: Garcia Escomel, Cristina
(86) Numéro de dépôt international: PCT/FR2018/000180
(87) Numéro de publication internationale: WO 2019/002705

(56) Documents cités:
- DE-B- 1 035 358
- FR-A- 1 311 578
- FR-A- 1 418 114
- FR-A- 1 506 679
- FR-A1- 2 014 172
- FR-A1- 2 587 351

## Description

Le domaine de l'invention concerne l'utilisation de compositions silicones pour la fabrication de moules négatifs en élastomère silicone utiles à la fabrication d'articles moulés.

Les compositions organopolysiloxaniques bicomposantes, utilisables pour la préparation de moules en élastomères silicones, ont déjà été proposées sur le marché industriel et dans la littérature chimique (FR1418114 et JP50066553). Ces compositions peuvent renfermer divers additifs (qui facilitent leur mise en œuvre ou leur transformation en élastomères) tels que des huiles dihydroxydiorganopolysiloxaniques de faible viscosité (FR2272145 et FR2300114).

La demande de brevet EP586153 décrit une composition silicone réticulable comprenant, outre les constituants couramment mis en oeuvre dans une telle composition, des co-charges de renfort, telle que des charges aciculaires à base de CaO et de SiO₂ ou encore de CaSiO₃ ; des charges circulaires à base de céramique et notamment de céramique de silice-alumine.

Une autre approche est décrite dans le document EP787766. Ce document décrit des compositions silicones réticulables à température ambiante par condensation pour la réalisation de moules, comprenant outre les constituants classiquement utilisés dans ce type de compositions, des additifs choisis parmi le groupe constitué par les phénols stériquement encombrés, les thiobisphénols stériquement encombrés, les dialkyldithiophosphates de zinc, les diaryldithiophosphates de zinc, les aminés aromatiques, les aminés stériquement encombrées ou encore des préparation à base de ces composés.

La demande de brevet WO03/074602 décrit l'utilisation de silice prétraitée dans une composition silicone réticulable par polycondensation comme agent de stabilisation de moules obtenus à partir de cette composition.

La demande de brevet WO06/106238 nous enseigne un procédé de stabilisation de moules composés d'un élastomère siliconé.

Parmi les compositions silicones réticulables en élastomère connues pour ce type d'application, celles qui réticulent dès la température ambiante forment une catégorie qui attire toute l'attention car elles ne nécessitent pas la mise en place de four consommateur d'énergie.

Ces compositions silicones sont classées en 2 groupes distincts : les compositions mono-composantes (RTV-1) et les compositions bi-composantes (RTV-2). Le terme "RTV" est l'acronyme pour "Room Temperature Vulcanising".

Lors de la réticulation, l'eau (soit apportée par une humidité atmosphérique dans le cas des RTV-1, soit introduite dans une partie de la composition dans le cas des RTV-2) permet la réaction de polycondensation, qui conduit à la formation du réseau élastomère.

Généralement, les compositions mono-composantes (RTV-1) réticulent quand elles sont exposées à l'humidité de l'air. Le plus souvent, la cinétique des réactions de polycondensation est extrêmement lente ; ces réactions sont donc catalysées par un catalyseur approprié.

Quant aux compositions bi-composantes (RTV-2), elles sont commercialisées et stockées sous la forme de deux composantes, une première composante contenant les matériaux polymériques de base et la deuxième composante contenant le catalyseur. Les deux composantes sont mélangées lors de l'emploi et le mélange réticule sous la forme d'un élastomère relativement dur. Ces compositions à deux composantes sont bien connues et sont notamment décrites dans l'ouvrage de Walter Noll "Chemistry and Technology of Silicones" 1968, 2ème édition aux pages 395 à 398.

Ces compositions comportent essentiellement 4 ingrédients différents :
- un polymère réactif α,ω-dihydroxydiorganopolysiloxane,
- un agent de réticulation, généralement un silicate ou un polysilicate,
- un catalyseur, et
- de l'eau.

Les propriétés mécaniques de ces compositions sont alors ajustées par l'addition de charges.

Le plus souvent, le catalyseur de condensation est à base d'un composé organique d'étain. En effet, de nombreux catalyseurs à base d'étain ont déjà été proposés comme catalyseur de réticulation de ces RTV-1 ou RTV-2. Des catalyseurs de polycondensation classiques comprennent des composés de dialkylétain, notamment des dicarboxylates de dialkylétain tels que le dilaurate et le diacétate de dibutylétain, les composés de titanate d'alkyle tels que le tétrabutyl ou le tétraisopropyltitanate, et les chélates de titane (EP-A-0 885 933, US-5 519 104, US-A-4,515,932, US-A-4,563,498, US-A-4,528,353).

Cependant, les catalyseurs à base d'alkyl étain, bien que très efficaces, le plus souvent incolores, liquides et solubles dans les huiles silicones présentent l'inconvénient d'être toxiques (CMR2 toxiques pour la reproduction).

De plus, face à une industrie du moulage en pleine évolution avec le développement de l'impression 3D, on voit apparaître de nouvelles contraintes liées à l'augmentation des cycles successifs de moulage/démoulage.

Pour un développement durable, il existe un besoin constant d'amélioration des procédés de préparation de moules négatifs en élastomère silicone à partir de compositions silicones réticulant par polycondensation en l'absence d'étain tout en améliorant la résistance aux cycles successifs de moulage/démoulage des dits-moules obtenus. Il faut également que les compositions silicones présentent une cinétique de réticulation adaptée et une bonne stabilité au stockage. De préférence, en l'absence d'agent de démoulage appliqué sur le master à reproduire, les moules négatifs en silicone ne doivent pas adhérer à ce dit-master.

Ainsi, un des objectifs essentiels de la présente invention est de proposer un nouveau procédé de préparation de moules négatifs en élastomère silicone utiles à la fabrication d'articles moulés où l'élastomère silicone est préparé à partir d'une composition silicone ne contenant pas de catalyseur métallique, tel que l'étain par exemple, et réticulant par des réactions de polycondensation en présence d'eau (par exemple humidité ambiante) avec une vitesse de réticulation suffisante pour assurer une cadence industrielle.

Un autre objectif est de proposer un nouveau procédé pour former des articles moulés à partir d'un moule négatif en élastomère silicone ayant une bonne résistance aux cycles successifs de moulage/démoulage et préparé à partir de compositions silicones ne contenant pas d'étain.

Un autre objectif est de proposer une composition silicone ne contenant pas d'étain et durcissant en un élastomère silicone en présence d'humidité avec une cinétique de prise en surface rapide, suivie d'une prise à cœur complète c'est-à-dire homogène de manière à préparer des moules négatifs en élastomères silicones non adhérents d'une part au master à reproduire et d'autre part aux articles moulés, présentant donc une bonne résistance aux cycles successifs de moulage/démoulage et utiles pour la préparation d'articles moulés en différents matériaux.

L'invention concerne également des moules négatifs en élastomère silicone utiles à la fabrication d'articles moulés en différents matériaux de reproduction tel qu'en polyester, polystyrène, polyéthylène, polychlorure de vinyle, polyuréthane, mousse polyuréthane, plâtre, béton, cire et savon. Cette liste n'est pas limitative.

Les pièces moulées en différents matériaux de reproduction ainsi obtenues représentent des objets très variés, à but utilitaire ou décoratif, tels que des tableaux de bord, des accoudoirs, du mobilier, des objets d'art.

Ces objectifs, parmi d'autres, sont atteints par la présente invention qui concerne un procédé, selon la revendication 1, de préparation d'un moule négatif **MN** en élastomère silicone utile à la fabrication d'articles moulés en différents matériaux de reproduction caractérisé en ce qu'il comprend les étapes a) à d) suivantes :
a) on prépare une composition polyorganosiloxane **X** réticulable en élastomère par des réactions de polycondensation, ne contenant pas de catalyseur métallique et comprenant:
   - une base silicone **B** comprenant au moins une huile polyorganosiloxane **A** réticulable par réaction de polycondensation, et
   - une quantité catalytiquement efficace d'au moins un catalyseur de polycondensation **C** qui est un composé organique répondant à la formule générale (**I**):

      (R")₂NH
   dans laquelle les symboles R", identiques ou différents représentent des radicaux hydrocarbonés aliphatiques de 6 à 10 atomes de carbone,
b) on applique ladite composition polyorganosiloxane X sur un master à dupliquer, éventuellement préalablement recouvert d'un agent de démoulage,
c) on laisse réticuler en présence d'humidité apportée par l'air ambiant ou par addition préalable d'eau ladite composition polyorganosiloxane **X** pour former un moule négatif **MN** en élastomère silicone qui est une empreinte correspondant au contour extérieur du master à dupliquer, et
d) on sépare le moule négatif **MN** en élastomère silicone du master à dupliquer.

Un avantage lié au procédé selon l'invention est que le nombre de cycles de moulage/démoulage d'articles moulés au sein de ce moule négatif **MN** est de préférence supérieur à 37 par exemple lors du démoulage de répliques en polyuréthane.

La technique du moulage en élastomère de silicone consiste à réaliser un moule "négatif", c'est à dire une empreinte, à partir d'un modèle "positif' appelé "master". Le moule en élastomère silicone ainsi créé permet de réaliser de nombreuses "copies" ou "tirages" ou "répliques" du master, sans limites de taille ou de contre-dépouilles.

Différentes techniques de moulage sont connues de l'homme de l'art. Comme exemple de technique de moulage on peut citer :
- le « moulage bateau » qui est destiné à la fabrication des moules autoportants, en une ou plusieurs pièces, par simple coulée de la composition après mélange des deux parties du RTV- 2 à l'état liquide sur le master initial au sein d'un contre-moule étanche. Ce procédé est préféré pour les formes relativement simples et sans contre dépouilles importantes ;
- le « moulage sous chape en une ou deux parties », et
- le « moulage par estampage » qui est préféré pour la prise d'empreinte de masters inclinés, verticaux ou en surplomb, en général de grandes dimensions ou lorsqu'il est impossible de déplacer le master.

Pour la mise en œuvre des compositions selon l'invention dans cette application, les techniques de coulée ou d'application via une spatule, un pinceau ou par pulvérisation sont utiles.

Les moules fabriqués ont la particularité de reproduire avec finesse et précision les détails des masters ; ils permettent, en outre, du fait du caractère anti-adhérent du caoutchouc silicone, d'améliorer les cadences de démoulage.

Un agent de démoulage peut être toutefois appliqué sur l'objet à reproduire préalablement à son moulage. Ces agents de démoulage sont bien connus de l'homme de l'art. A titre illustratif nullement limitatif, on peut utiliser une solution aqueuse de savon ou une suspension de cire.

Un autre objet de la présente invention concerne un procédé de moulage de répliques **R** caractérisé en qu'il comprend les étapes a) à d) selon l'invention suivies des étapes e) à h) suivantes :
e) on remplit ce moule négatif **MN** en élastomère silicone avec un matériau de reproduction,
f) on laisse durcir le matériau de reproduction à l'intérieur du moule négatif **MN** en élastomère silicone pour produire une réplique **R** du master à dupliquer,
g) on sépare la réplique **R** du moule négatif **MN** en élastomère silicone, et
h) éventuellement le moule négatif **MN** en élastomère silicone subit à nouveau les étapes e) à g) pour former une nouvelle réplique **R**.

Un avantage lié au procédé selon l'invention est que le nombre de cycles e) à g) réalisable avec le moule négatif **MN** en élastomère silicone est supérieur à 37 par exemple lors du démoulage de répliques en polyuréthane.

Différents matériaux de reproduction sont connus de l'homme de l'art tel que le polyester, polystyrène, polyéthylène, polychlorure de vinyle, polyuréthane, mousse polyuréthane, plâtre, béton, cire et savon. Cette liste n'est pas limitative. Ces matériaux de reproduction se présentent avant moulage sous différentes formes à savoir liquide plus ou moins visqueux, dispersion, suspension, mono composant ou multi-composants.

Plus précisément, la présente invention concerne une composition organopolysiloxanique vulcanisable en élastomère silicone dès la température ambiante par des réactions de polycondensation comprenant :
(a) une base silicone apte à durcir en élastomère silicone en présence d'un catalyseur par des réactions de polycondensation comprenant :
   - pour 100 parties en poids d'au moins un polymère réactif α,ω dihydroxydiorganopolysiloxane **A**,
   - de 0,1 à 60 parties en poids d'au moins un agent de réticulation **AR**, et
   - de 0,001 à 10 parties en poids d'eau, et
(b) une quantité catalytiquement efficace d'un catalyseur **C** de polycondensation.

Le polymère réactif α,ω-dihydroxydiorganopolysiloxane **A** utilisable dans les bases silicones selon l'invention sont ceux répondant à la formule (1) suivante : 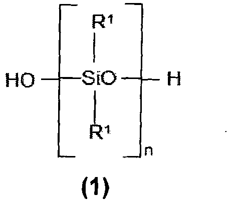 formule dans laquelle :
- les substituants R¹, identiques ou différents, représentent chacun un radical monovalent hydrocarboné saturé ou non en C₁ à C₁₃, substitué ou non substitué, aliphatique, cyclanique ou aromatique et de préférence R¹ est un méthyl ; et
- n a une valeur suffisante pour conférer aux polyorganosiloxane de formule (**1**) une viscosité dynamique à 25°C allant de 10 à 1.000.000 mPa.s ;

Il doit être compris que, dans le cadre de la présente invention, on peut utiliser comme polyorganosiloxane réactif **A** un mélange constitué de plusieurs polyorganosiloxanes hydroxylés qui diffèrent entre eux par la valeur de la viscosité et/ou la nature des substituants liés aux atomes de silicium. Il doit être indiqué de plus que les polyorganosiloxanes hydroxylés de formule **(1)** peuvent éventuellement comprendre des motifs T de formule R¹SiO_{3/2} et/ou des motifs Q de formule SiO_{4/2} dans la proportion d'au plus 1 % (ces % exprimant le nombre de motifs T et/ou Q pour 100 atomes de silicium).
On met en œuvre des polymères hydroxylés diorganopolysiloxanes linéaires réactifs **A** ayant une viscosité dynamique à 25°C allant de 10 à 1.000.000 mPa.s et, de préférence, allant de 50 à 200.000 mPa.s.

Ces polyorganosiloxanes de base sont, dans leur grande majorité, commercialisées par les fabricants de silicones. D'autre part, leurs techniques de fabrication sont bien connues ; on les trouve décrites par exemple dans les brevets français FR-A-1 134 005, FR-A-1 198 749, FR-A-1 226 745.

Toutes les viscosités dont il est question dans le présent exposé correspondent à une grandeur de viscosité dynamique à 25°C dite "Newtonienne", c'est-à-dire la viscosité dynamique qui est mesurée, de manière connue en soi, avec un viscosimètre Brookfield à un gradient de vitesse de cisaillement suffisamment faible pour que la viscosité mesurée soit indépendante du gradient de vitesse.

Le substituant R¹ mentionné ci-avant pour les polyorganosiloxane réactifs **(A)** peut être choisi parmi les radicaux suivants :
- les radicaux alkyles et halogénoalkyles ayant de 1 à 13 atomes de carbone tels que les radicaux méthyle, éthyle, propyle, isopropyle, butyle, pentyle, hexyle, éthyl-2 hexyle, octyle, décyle, trifluoro-3,3,3 propyle, trifluoro-4,4,4 butyle, pentafluoro-4,4,4,3,3 butyle,
- les radicaux cycloalkyles et halogénocycloalkyles ayant de 5 à 13 atomes de carbone tels que les radicaux cyclopentyle, cyclohexyle, méthylcyclohexyle, propylcyclohexyle, difluoro-2,3 cyclobutyle, difluoro-3,4 méthyl-5 cycloheptyle,
- les radicaux alcényles ayant de 2 à 8 atomes de carbone tels que les radicaux vinyle, allyle, butène-2 yle,
- les radicaux aryles et halogénoaryles mononucléaires ayant de 6 à 13 atomes de carbone tels que les radicaux phényle, tolyle, xylyle, chlorophényle, dichlorophényle, trichlorophényle, et
- les radicaux cyanoalkyles dont les chaînons alkyles ont de 2 à 3 atomes de carbone tels que les radicaux β-cyanoéthyle et γ-cyanopropyle.

Comme exemples de radicaux R¹, on peut citer les radicaux alkyles ayant de 1 à 8 atomes de carbone tels que méthyle, éthyle, propyle, butyle, hexyle et octyle, les radicaux vinyle, les radicaux phényle.

Comme exemples de radicaux R¹ substitués, on peut citer les radicaux trilfuoro-3,3,3 propyle, chlorophényle et bétacyanoéthyle.

Dans les produits de formule **(1)** généralement utilisés industriellement, au moins 60 % en nombre des radicaux R¹ sont des radicaux méthyle, les autres radicaux étant généralement des radicaux phényle et/ou vinyle.

Comme agent de réticulation **AR** on peut citer :
- les silanes de formule générale **(2)** suivante :

   R²ₖ Si(OR³)₍₄₋ₖ₎ **(2)**

   dans laquelle les symboles R³, identiques ou différents, représentent des radicaux alkyles ayant de 1 à 8 atomes de carbone, tels que les radicaux méthyle, éthyle, propyle, butyle, pentyle, éthyl-2 hexyle, des radicaux oxyalkylènes en C₃-C₆, le symbole R² représente un groupe hydrocarboné aliphatique saturé ou insaturé, linéaire ou ramifié, un groupe carbocyclique, saturé ou insaturé et/ou aromatique, monocyclique ou polycyclique et k est égal à 0 ou 1 ; et
- les produits d'hydrolyse partielle et condensation du silane de formule **(2)**.

Comme exemple de radicaux oxyalkylène en C₃-C₆ on peut citer les radicaux suivants :

CH₃OCH₂CH₂-

CH₃OCH₂CH(CH₃)-

CH₃OCH(CH₃)CH₂-

C₂H₅OCH₂CH₂CH₂-

Avantageusement, le symbole R² représente un radical hydrocarboné en C₁-C₁₀ englobant :
- les radicaux alkyles en C₁-C₁₀ tels que les radicaux méthyle, éthyle, propyle, butyle, pentyle, éthyl-2 hexyle, octyle, décyle,
- les radicaux vinyle, allyle, et
- les radicaux cycloalkyles ce C₅-C₈ tels que les radicaux phényle, tolyle et xylyle.

Les agents réticulants **AR** de formule **(2)** sont des produits accessibles sur le marché des silicones ; de plus leur emploi dans les compositions durcissant dès la température ambiante est connu ; il figure notamment dans les brevets français FR-A-1 126 411, FR-A-1 179 969, FR-A-1 189 216, FR-A-1 198 749, FR-A-1 248 826, FR-A-1 314 649, FR-A-1 423 477, FR-A-1 432 799 et FR-A-2 067 636.

Parmi les agents de réticulation **AR**, on préfère plus particulièrement les alkyltrialcoxysilanes, les silicates d'alkyle et les polysilicates d'alkyle, dans lesquels les radicaux organiques sont des radicaux alkylés ayant de 1 à 4 atomes de carbone.

Les silicates d'alkyle peuvent être choisis parmi le silicate de méthyle, le silicate d'éthyle, le silicate d'isopropyle, le silicate de n-propyle et les polysilicates choisis parmi les produits d'hydrolyse partielle et condensation de ces silicates ; ce sont des polymères constitués d'une proportion importante de motifs de formule :

(R⁴O)₃SiO_{1/2}, R⁴OSiO_{3/2}, (R⁴O)₂SiO_{2/2} et SiO_{4/2} ;

le symbole R⁴ représentant les radicaux méthyle, éthyle, isopropyle et/ou n-propyle. Pour les caractériser, on se base habituellement sur leur teneur en silicium qui est établie par dosage du produit d'hydrolyse d'un échantillon.

Comme autres exemples d'agents de réticulation **AR** qui peuvent être utilisés, on cite plus particulièrement les silanes suivants :

CH₃Si(OCH₃)₃ ; C₂H₅Si(OC₂H₅)₃ ; C₂H₅Si(OCH₃)₃

CH₂=CHSi(OCH₃)₃; CH₂=CHSi(OCH₂CH₂OCH₃)₃

C₆H₅Si(OCH₃)₃ ; [CH₃][OCH(CH₃)CH₂OCH₃]Si[OCH₃]₂

Si(OCH₃)₄ ; Si(OC₂H₅)₄; Si(OCH₂CH₂CH₃)₄; Si(OCH₂CH₂CH₂CH₃)₄

Si(OC₂H₄OCH₃)₄ ; CH₃Si(OC₂H₄OCH₃)₃ ; ClCH₂Si(OC₂H₅)₃ ;

Comme autres exemples d'agent de réticulation **AR**, on peut citer le polysilicate d'éthyle, ou le polysilicate de n-propyle.

On utilise généralement de 0,1 à 60 parties en poids d'agent réticulant de formule **(2)** pour 100 parties en poids de polymère réactif de formule **(1).**

Comme catalyseur **C**, on peut citer les composés organiques de la famille des amines secondaires répondant à la formule générale **(I)**:

(R")₂NH

dans laquelle les symboles R", identiques ou différents représentent des radicaux hydrocarbonés aliphatiques de 1 à 30 atomes de carbone, préférentiellement de 4 à 12 atomes de carbone et encore plus préférentiellement ceux ayant de 6 à 10 atomes de carbone.

Lors de l'étape a) des procédés selon l'invention, le catalyseur de polycondensation C répond à la formule générale (I):

(R")₂NH

dans laquelle les symboles R", identiques ou différents représentent des radicaux hydrocarbonés aliphatiques ayant de 6 à 10 atomes de carbone, de préférence de 8 à 10 atomes de carbone.

Le catalyseur C qui vient d'être décrit est utilisé pour permettre ou faciliter le durcissement en élastomères silicones, dès la température ambiante, de bases polyorganosiloxaniques réticulables par des réactions de polycondensation se présentant sous la forme de bi-composant. Le système catalytique étant incorporé dans une des fractions avec un agent réticulant **AR** alors que l'autre fraction contient un polyorganosiloxane réactif **A** et l'eau.

Dans la présente invention, on entend par température ambiante, une température comprise entre 10 et 40°C.

Selon un autre aspect, l'invention concerne une composition polyorganosiloxane **X**, selon la revendication 4, réticulable en élastomère par des réactions de polycondensation, ne contenant pas de catalyseur métallique et comprenant :
- une base silicone **B** comprenant au moins une huile polyorganosiloxane **A** réticulable par réaction de polycondensation de manière à former un élastomère silicone, et
- une quantité catalytiquement efficace d'au moins un catalyseur de polycondensation **C** qui est un composé organique répondant à la formule générale (**I**):

   (R")₂NH

   dans laquelle les symboles R", identiques ou différents représentent des radicaux hydrocarbonés aliphatiques ayant de 6 à 10 atomes de carbone, de préférence de 8 à 10 atomes de carbone.

Dans la présente invention, on entend par une quantité catalytiquement efficace d'au moins un catalyseur de polycondensation **C**, une quantité comprise entre 0,01 à 50 parties en poids du catalyseur **C** de polycondensation.

Les catalyseurs mis en œuvre dans les compositions silicones utilisées lors de la préparation de moules en élastomère silicone selon l'invention permettent simultanément d'obtenir :
- un pot-life suffisamment long pour mettre en œuvre le mélange partie P1 + partie P2 (entre 20 et 200 mn),
- une réticulation « rapide » (Post-curing de maximum +2 et ratio DSA 24h x 100 / DSA 14j > 68%),
- des moules en élastomère silicone obtenus par le procédé selon l'invention qui permettent de mouler un nombre conséquent de pièces par exemple en polyuréthane (nombre de cycles successifs de moulages/démoulages > 37),
et cela en l'absence de composés à base d'étain.

Pour satisfaire aux conditions supplémentaires que la partie contenant le catalyseur soit homogène (monophasique transparente) et que les moules en élastomère silicone obtenus par le procédé selon l'invention n'adhèrent pas au master et cela en l'absence d'agent de démoulage appliqué sur le master à reproduire, les catalyseurs de polycondensation **C** répondent à la formule générale **(I)**:

(R")₂NH

dans laquelle les symboles R", identiques ou différents représentent des radicaux hydrocarbonés aliphatiques ayant de 6 à 10 atomes de carbone.

Les compositions selon l'invention peuvent comporter en outre des charges **CH** renforçantes ou semi-renforçantes ou de bourrage qui sont de préférence choisies parmi les charges siliceuses.

Les charges renforçantes sont choisies de préférence parmi les silices de combustion et les silices de précipitation. Elles ont, en général, une surface spécifique, mesurée selon les méthodes BET, d'au moins 50 m²/g, de préférence supérieure à 70 m²/g, une dimension moyenne des particules primaires inférieures à 0,1 µm (micromètre) et une densité apparente inférieure à 200 g/litre.

Ces silices peuvent être incorporées telles quelles ou après avoir été traitées par des composés organosiliciques habituellement utilisés pour cet usage. Parmi ces composés figurent les méthylpolysiloxanes tels que l'hexaméthyldisiloxane, l'octaméthyldisiloxane, l'octaméthylcyclotétrasiloxane, des méthylpolysilazanes tels que l'hexaméthyldisilazane, l'hexaméthylcyclotrisilazane, des chlorosilanes tels que le diméthylchlorosilane, le triméthylchlorosilane, le méthylvinyldichlorosilane, le diméthylvinylchlorosilane, des alcoxysilanes tels que le diméthyldiméthoxysilane, le diméthylvinyléthoxysilane et le triméthylméthoxysilane.

Lors de ce traitement, les silices peuvent accroître leur poids de départ jusqu'à un taux de 20 %.

Les charges semi-renforçantes ou de bourrage ont un diamètre particulaire supérieur à 0,1 µm (micromètre) et sont choisies parmi le quartz broyé, les argiles calcinées et les terres de diatomées.

Outre les constituants principaux **A**, **AR**, **C** et **CH**, des polymères polyorganosiloxanes linéaires non réactif **E** peuvent être introduits dans le dessein d'agir sur les caractéristiques physiques des compositions conformes à l'invention et/ou sur les propriétés mécaniques des élastomères issus du durcissement de ces compositions.

Ces polymères polyorganosiloxanes linéaires non réactif **E** sont bien connus; ils comprennent plus spécialement: des polymères α, ω bis(triorganosiloxy)diorganopolysiloxanes de viscosités d'au moins 10 mPa.s à 25°C, formés essentiellement de motifs diorganosiloxy et d'au plus 1 % de motifs monoorganosiloxy et/ou siloxy, les radicaux organiques liés aux atomes de silicium étant choisis parmi les radicaux méthyle, vinyle et phényle, 60 % au moins de ces radicaux organiques étant des radicaux méthyle et 10 % au plus étant des radicaux vinyle. La viscosité de ces polymères peut atteindre plusieurs dizaines de millions de mPa.s à 25°C; ils comprennent donc des huiles d'aspect fluide à visqueux et des gommes molles à dures. Ils sont préparés selon les techniques usuelles décrites plus précisément dans les brevets français FR-A-978 058, FR-A-1 025 150, FR-A-1 108 764, FR-A-1 370 884. On utilise de préférence les huiles α,ω-bis(triméthylsiloxy) diméthylpolysiloxanes de viscosité allant de 10 mPa.s à 1 000 mPa.s à 25°C. Ces polymères qui jouent le rôle de plastifiants peuvent être introduits à raison d'au plus 70 parties, de préférence de 5 à 20 parties, pour 100 parties des polymères réactifs α, ω -dihydroxydiorganopolysiloxane **A**.

Les compositions selon l'invention peuvent en outre avantageusement comprendre au moins une résine silicone **G**. Ces résines silicones sont des polymères organopolysiloxanes ramifiés bien connus et disponibles dans le commerce. Elles présentent, par molécule, au moins deux motifs différents choisis parmi ceux de formule R‴₃SiO_{1/2} (motif M), R‴₂SiO_{2/2} (motif D), R‴SiO_{3/2} (motif T) et SiO_{4/2} (motif Q). Les radicaux R‴ sont identiques ou différents et sont choisis parmi les radicaux alkyles linéaires ou ramifiés, les radicaux vinyle, phényle, trifluoro-3,3,3 propyle. De préférence, les radicaux alkyles présentent de 1 à 6 atomes de carbone inclus. Plus particulièrement, on peut citer comme radicaux R‴ alkyle, les radicaux méthyle, éthyle, isopropyle, tertiobutyle et n-hexyle. Ces résines sont de préférence hydroxylées et ont dans ce cas une teneur pondérale en groupe hydroxyle comprise entre 5 et 500 meq/100 g.

Comme exemple de résines, on peut citer les résines MQ, les résines MDQ, les résines TD et les résines MDT.

Selon un mode de réalisation de l'invention, la composition polyorganosiloxane **X** comprend :
(a) la base silicone **B** apte à durcir en élastomère silicone en présence d'un catalyseur par des réactions de polycondensation comprend :
   - pour 100 parties en poids d'au moins un polymère réactif α,ω-dihydroxydiorganopolysiloxane **A** dont les radicaux organiques sont des radicaux hydrocarbonés de préférence choisi parmi le groupe constitué par : les alkyles ayant de 1 à 20 atomes de carbone ; les cycloalkyles ayant de 3 à 8 atomes de carbone ; les alcényles ayant de 2 à 8 atomes de carbone et les cycloalcényles ayant de 5 à 8 atomes de carbone ;
   - de 0,1 à 60 parties en poids d'au moins un agent de réticulation **AR** choisi parmi le groupe constitué par: les polyacoxysilanes, les produits provenant de l'hydrolyse partielle d'un polyalcoxysilane et les polyalcoxysiloxanes ;
   - de 0 à 250 parties en poids, de préférence de 5 à 200 parties en poids, d'au moins une charge **CH** ;
   - de 0,001 à 10 parties en poids d'eau,
   - de 0 à 100 parties en poids d'au moins un polymère polyorganosiloxane linéaire non réactif **E** consistant dans un homopolymère ou copolymère linéaire dont, par molécule, les substituants organiques monovalents, identiques ou différents entre eux, liés aux atomes de silicium sont choisis parmi les radicaux alkyles, cycoalkyles, alcényles, aryles, alkylarylènes et arylalkylènes,
   - de 0 à 20 parties en poids d'une base colorante ou d'un agent de coloration **F**,
   - de 0 à 70 parties en poids de résines polyorganosiloxanes **G**, et
   - de 0 à 20 parties d'additifs auxiliaires **H** connus de l'homme de métier, tels que des agents plastifiants ; des ralentisseurs de réticulation, des huiles minérales, des agents antimicrobiens, des additifs de tenue thermique tels que les oxydes de titane, de fer ou de cérium, et
(b) de 0,01 à 50 parties en poids d'un catalyseur **C** de polycondensation.

Pour la mise en œuvre des compositions silicones **X** selon l'invention, on produit chaque composition sous forme d'un système bicomposant formé de deux parties P1 et P2 destinées à être mise en contact l'une à l'autre pour produire l'élastomère réticulé par polycondensation.

Selon un autre de ses aspects, la présente divulgation est relative à un système bicomposant précurseur de la composition polyorganosiloxane **X** vulcanisable en élastomère silicone dès la température ambiante par des réactions de polycondensation caractérisé :
- en ce qu'il se présente en deux parties P1 et P2 distinctes destinées à être mélangées pour former ladite composition, et
- en ce que l'une de ces parties comprend le catalyseur **C** alors que l'autre partie en est exempte et comprend :
   - pour 100 parties en poids du (ou des) polymère(s) réactif(s) α,ω-dihydroxydiorganopolysiloxane(s) **A**, et
   - de 0,001 à 10 partie(s) en poids d'eau.

Selon un mode de réalisation préféré, le système bicomposant précurseur de la composition polyorganosiloxane **X** vulcanisable en élastomère silicone dès la température ambiante par des réactions de polycondensation selon l'invention est caractérisé en ce que :
- la partie P1 comprend :
   - pour 100 parties en poids d'au moins un polymère réactif α,ω-dihydroxydiorganopolysiloxane **(A)** dont les radicaux organiques sont des radicaux hydrocarbonés de préférence choisi parmi le groupe constitué par : les alkyles ayant de 1 à 20 atomes de carbone ; les cycloalkyles ayant de 3 à 8 atomes de carbone ; . les alcényles ayant de 2 à 8 atomes de carbone et les cycloalcényles ayant de 5 à 8 atomes de carbone ;
   - de 0,001 à 10 parties en poids d'eau,
   - de 0 à 200 parties en poids, de préférence de 5 à 150 parties, d'au moins une charge **(CH)**;
   - de 0 à 150 parties en poids d'au moins un polymère polyorganosiloxane linéaire non réactif **(E)** consistant dans un homopolymère ou copolymère linéaire dont, par molécule, les substituants organiques monovalents, identiques ou différents entre eux, liés aux atomes de silicium sont choisis parmi les radicaux alkyles, cycoalkyles, alcényles, aryles, alkylarylènes et arylalkylènes,
   - de 0 à 70 parties en poids de résines polyorganosiloxanes **(G)**, et
   - de 0 à 20 parties en poids d'une base colorante ou d'un agent de coloration **F** ; et
- la partie P2 comprend :
   - de 0,1 à 60 parties en poids d'au moins un agent de réticulation **AR** choisi parmi le groupe constitué par: les polyacoxysilanes, les produits provenant de l'hydrolyse partielle d'un polyalcoxysilane et les polyalcoxysiloxanes ;
   - de 0,01 à 50 parties en poids du catalyseur **C** de polycondensation,
   - de 0 à 20 parties en poids d'une base colorante ou d'un agent de coloration **F**,
   - de 0 à 70 parties en poids d'au moins un polymère polyorganosiloxane linéaire non réactif **E** consistant dans un homopolymère ou copolymère linéaire dont, par molécule, les substituants organiques monovalents, identiques ou différents entre eux, liés aux atomes de silicium sont choisis parmi les radicaux alkyles, cycoalkyles, alcényles, aryles, alkylarylènes et arylalkylènes, et
   - de 0 à 125 parties en poids, de préférence de 0,1 à 40 parties, d'au moins une charge **CH**.

L'invention concerne également le moule négatif en élastomère silicone **MN** obtenu à l'issue de l'étape d) des procédés selon l'invention.

L'invention concerne également l'utilisation d'un moule négatif en élastomère silicone **MN** obtenu à l'issue de l'étape d) des procédés selon l'invention pour la fabrication d'articles moulés.

D'autres avantages et caractéristiques de la présente invention apparaîtront à la lecture des exemples suivants donnés à titre illustratif.

### EXEMPLES

### 1) Matières premières utilisées

**Empatage** : Mélange de silice pyrogénée A200 (fournisseur Evonik - 200 m²/g) traitée avec groupements triméthylsilyles (environ 30 %) **(CH1)**, d'huile silicone 47V500 (environ 42%) **(E1)** et d'huile silicone 48V14000 (environ 28%) **(A1)**.
**Sifraco**^{®} **E600** (fournisseur Sibelco) = Quartz = Farine de silice, Silice cristalline,Silice broyée **(CH2)**
**Bluesil**^{®} **FLD 48V14000** (huile α,ω-dihydroxydiorganopolysiloxane) viscosité 14000 mPa.s - MW approx 48 kg/mol **(A1)**
**Bluesil^{®} FLD 48V3500** (huile α,ω-dihydroxydiorganopolysiloxane) viscosité 3500 mPa.s - MW approx 30 kg/mol **(A2)**
**Bluesil**^{®} **FLD 48V750** (huile α,ω-dihydroxydiorganopolysiloxane) viscosité 750 mPa.s - MW approx 15 kg/mol **(A3)**
**Bluesil^{®} RP 120PA** - (huile α,ω-dihydroxydiorganopolysiloxane) viscosité 45 mPa.s - MW approx 0,5 kg/mol **(A4)**
**Bluesil**^{®} **FLD 47V50** (huile silicone non fonctionelle) Viscosité 50 mPa.s, MW approx 3 - 4 kg/mol **(E1)**
**Base Colorante 552** (fournisseur Sioen) = base colorante Blanche à base de TiO2 **(F1)**
**Silane 51005** - Silicate d'éthyle avancé ou partiellement condensé (SiOEt₄), ester de tétra-éthyle, hydrolysé **(AR1**)
**Dynasilan**^{®} **P** (fournisseur Evonik) ou Silicate de Propyle ou tetra n-propylorthosilicate ou orthosilicate de tétrapropyle **(AR2)**
**Mediaplast^{®} VP 5071/A** (fournisseur Kettlitz Chemie) - Mélange de polyalkylbenzène et d'hydrocarbures à haut poids moléculaire (comprend entre 25 et 50% de d'alkylbenzène (C10-C13)) **(H1)**
**Néodécanoate de diméthyl étain** (fournisseur Momentive)
**Décyl aminé** CAS 2016-57-1 (fournisseur Sigma-Aldrich) **(C1)**
**Dodécyl amine** CAS 124-22-1 (fournisseur Sigma-Aldrich) **(C2)**
**Dibutyl amine** CAS 111-92-2 (fournisseur Sigma-Aldrich) **(C3)**
**Dihexyl amine** CAS 143-16-8 (fournisseur Sigma-Aldrich) **(C4)**
**Dioctyl amine** CAS 1120-48-5 (fournisseur Sigma-Aldrich) **(C5)**
**Diisononyl amine** CAS 28454-70-8 (fournisseur Sigma-Aldrich) **(C6)**
**Didodécyl aminé** CAS 3007-31-6 (fournisseur Sigma-Aldrich) (**C7**)
**Didécyl amine** CAS 1120-49-6 (fournisseur Sigma-Aldrich) **(C8)**

### 2) Préparation des exemples selon l'invention et exemples comparatifs :

Dans toutes les compositions, les pourcentages (%) mentionnés sont exprimés en poids par rapport au poids total de tous les constituants de la formulation.
Les systèmes bicomposants précurseurs des compositions polyorganosiloxanes vulcanisables en élastomère silicone sont composés d'une partie P1 et d'une partie P2.

### Préparation des parties P1

Les différents constituants de la partie P1 sont mélangés avec un appareil de type speed-mixer DAC400 ou avec une hélice dans un pot plastique.

**Tableau 1 : Composition des Parties P1**

| **Composition** | **Partie P1-1** | **Partie P1-2** |
|---|---|---|
| **Empatage** | 60,2 | 60,2 |
| **Sifraco E600** | 18 | 18 |
| **48V3500** | 20 | - |
| **48V14000** | - | 20 |
| **Base Colorante 552** | 0,5 | 0,5 |
| **48V750** | 1 | 1 |
| **Bluesil RP 120PA** | 0,2 | 0,2 |
| **eau** | 0,1 | 0,1 |
| **Total** | 100 | 100 |

### Préparation des parties P2

Les différents constituants des parties P2 sont mélangés manuellement dans un flacon en verre.

**Tableau 2 : Partie P2 des exemples comparatifs**

| | **Partie P2** | | |
|---|---|---|---|
| **Référence** | **Partie P2-C1 pour essai comparatif C1** | **Partie P2-C2 pour essai comparatif C2** | **Partie P2-C3 pour essai comparatif C3** |
| **Catalyseur** | 6,6 | 2,11 | 2,49 |

| | **Néodécanoate de diméthylétain** | **Décyl amine** | **Dodécyl amine** |
|---|---|---|---|
| **Silane 51005** | 40 | 35 | 35 |
| **Silicate de Propyle** | | 5,3 | 5,3 |
| **Mediaplast VP 5071/A** | 12,95 | 13,96 | 13,87 |
| **47V50** | 40,45 | 43,63 | 43,34 |
| **Total** | 100 | 100 | 100 |

**Tableau 3 : Partie P2 des exemples selon l'invention**

| **Référence** | **P2-1** | **P2-2** | **P2-3** | **P2-4** | **P2-5** | **P2-6** | **P2-7** | **P2-8** | **P2-9** | **P2-10** |
|---|---|---|---|---|---|---|---|---|---|---|
| **Catalyseur** | 3,62 | 3,62 | 3,24 | 3,47 | 2,49 | 4 | 9,5 | 1,74 | 2,49 | 4 |

| | **Diisonon yl amine** | **Diisonon yl amine** | **Dioctyl aminé** | **Dibutyl amine** | **Dihexyl amine** | **Didécyl amine** | **Didodécy l amine** | **Dibutyl amine** | **Dihexyl amine** | **Didécyl amine** |
|---|---|---|---|---|---|---|---|---|---|---|
| **Silane 51005** | 40 | 35 | 35 | 40 | 35 | 40 | 40 | 35 | 40 | 35 |
| **Silicate de Propyle** | | 5,3 | 5,3 | | 5,3 | | | 5,3 | | 5,3 |
| **Mediaplast VP 5071/A** | 13,67 | 13,6 | 13,69 | 13,7 | 13,87 | 13,58 | 12,24 | 14,06 | 13.94 | 13,5 |
| **47V50** | 42,71 | 42,48 | 42,77 | 42,83 | 43,34 | 42,42 | 38,26 | 43,9 | 43.57 | 42,2 |
| **Total** | 100 | 100 | 100 | 100 | 100 | 100 | 100 | 100 | 100 | 100 |

### Préparation des mélanges P1 + P2

Les parties P1 et P2 mises en œuvre dans les systèmes bicomposants comparatifs notés Ck avec k de 1 à 3 et les systèmes bicomposants selon l'invention notés Ex.m avec m de 1 à 11 sont détaillés dans le tableau 4.

**Tableau 4 : Composition des systèmes bicomposants**

| **Référence Bicomposant P1+P2** | **C1** | **C2** | **C3** | **Ex.1** | **Ex.2** | **Ex.3** | **Ex.4** | **Ex.5** | **Ex.6** | **Ex.7** | **Ex.8** | **Ex.9** | **Ex.10** | **Ex.11** |
|---|---|---|---|---|---|---|---|---|---|---|---|---|---|---|
| **Partie P1** | P1-1 | P1-1 | P1-1 | P1-1 | P1-1 | P1-1 | P1-1 | P1-1 | P1-1 | P1-1 | Pl-1 | Pl-2 | P1-1 | P1-2 |
| **Partie P2** | P2-C1 | P2-C2 | P2-C3 | P2-1 | P2-2 | P2-3 | P2-4 | P2-5 | P2-6 | P2-7 | P2-8 | P2-9 | P2-10 | P2-1 |

La partie P1 et la partie P2 sont mélangées à la spatule pendant trois minutes puis au speed-mixer (mélangeur planétaire) pendant vingt secondes à 1800 tr/min. Le mélange est ensuite dégazé sous vide afin de ne pas avoir de défauts (bulles).

Le ratio massique est 100 parties de P1 pour 5 parties de P2.

### Préparation des moules négatifs en élastomère silicone :

Des moules négatifs ont été réalisés en appliquant la formulation pré-mélangée (mélange de la partie P1 et de la partie P2) sur un master à dupliquer déposé au fond d'un pot.

45 g de partie P1 et 2,25 g de partie P2 sont mélangés à la spatule pendant trois minutes puis au speed-mixer pendant vingt secondes à 1800 tr/min. Le mélange est ensuite dégazé sous cloche à vide pendant cinq minutes afin de ne pas avoir de défauts (bulles, air incorporé lors du mélange à la spatule) dans le moule négatif.

Un master (parallélèpipède rectangle ayant une hauteur de 8mm ; une largeur de 35 mm et une longueur de 35 mm) à dupliquer est déposé et centré au fond d'un pot plastique (dégraissé préalablement à l'éthanol) de hauteur 27 mm et de diamètre intérieur 63 mm.

On réalise la tare du master + pot et on applique entre 40 et 42 g de la formulation P1 + P2 sur le master.

Les moules négatifs témoins notés MN Ck avec k de 1 à 3 et les moules négatifs selon l'invention notés MN m avec m de 1 à 11 sont obtenus après réticulation des mélanges P1+P2. On laisse réticuler le mélange à 23°C pendant 24 heures. On sépare le moule négatif en élastomère silicone du master à dupliquer.

**Tableau 5 : Référence des moules négatifs témoins et selon l'invention**

| **Référence moule négatif** | **MN C1** | **MN C2** | **MN C3** | **MN 1** | **MN 2** | **MN3** | **MN4** | **MN 5** | **MN6** | **MN7** | **MN8** | **MN9** | **MN 10** | **MN 11** |
|---|---|---|---|---|---|---|---|---|---|---|---|---|---|---|
| **Référence mélange P1+P2** | **C1** | **C2** | **C3** | **Ex.1** | **Ex.2** | **Ex.3** | **Ex.4** | **Ex.5** | **Ex.6** | **Ex.7** | **Ex.8** | **Ex.9** | **Ex.10** | **Ex.11** |

### Préparation des répliques :

Les moules négatifs en élastomère silicone sont remplis une première fois de résine de coulée de polyuréthane (matériau de reproduction).

La résine polyuréthane à prise rapide F190 d'Axson est préparée dans des pots plastiques transparents (afin de voir l'homogénéité du mélange) de hauteur 48 mm et de diamètre intérieur 51 mm. La partie polyol est chargée et présente une décantation, elle est donc mélangée à la spatule avant emploi (couleur et aspect homogènes sans sédimentation au fond du récipient). Cette opération s'effectue facilement à la main.

On pèse 12,5 g ± 0,1 g de partie polyol (couleur blanche) et 12,5 g ± 0,1 g de partie isocyanate (couleur marron). Les deux parties sont mélangées à la spatule pendant une minute avec contrôle de l'homogénéité du mélange (obtention d'un mélange de couleur jaune). Deux moules négatifs sont ensuite remplis avec cette préparation (la cavité correspondant au master à dupliquer est remplie jusqu'au bord).

On laisse durcir à température ambiante, pendant 90 minutes, le matériau de reproduction à l'intérieur des moules négatifs en silicone pour produire une première réplique.

On sépare la réplique du moule négatif en silicone, en décollant chaque bord du moule négatif. Si aucune adhérence au moule négatif n'est observée, une nouvelle réplique est préparée et ainsi de suite jusqu'à détérioration du moule négatif en élastomère silicone.

### 3) Caractérisation

### Tests de caractérisation du mélange P1+P2

Les propriétés du mélange P1+P2 permettant de produire les moules en élastomères silicone sont caractérisées par un pot-life et une cinétique de réticulation exprimée en Dureté Shore A.

L'élastomère silicone doit, de plus, ne pas adhérer au master afin d'en faciliter sa sortie du moule. Un nombre de démoulages élevé reflète une durabilité élevée du moule en élastomère silicone.

### Mesure du Pot-life (avec un appareillage « Techne Gelation Timer GT3 ») selon la norme NF T 77 107

Un plongeur de diamètre 22 mm et pesant 11,4 g immergé dans un échantillon est animé d'un mouvement vertical alternatif avec une période d'une minute. Lorsque la consistance du produit est suffisante pour supporter le poids du disque pendant ½ minute, le point de gel est atteint. Un contact électrique arrête alors le compteur temps enclenché en début d'essai. Ce temps exprimé en minutes (mn) est ainsi assimilé au pot-life. Un pot-life entre 20 et 200mn est recherché.

### Mesure de la cinétique de réticulation

La cinétique de réticulation est évaluée grâce à la dureté Shore A (DSA) selon les normes DIN 53505 et ISO 868. Cette dureté est généralement mesurée 24 heures puis 4 jours et 14 jours après le mélange des parties P1 + P2. On recherche une dureté après 24h égale à au moins 68% de la dureté finale à 14 jours. Les duretés au-dessus et au-dessous du pion sont mesurées afin d'évaluer l'homogénéité de la réticulation. On recherche de préférence une différence inférieure ou égale à 2 Shore A.

Le Post-curing exprime la différence de dureté entre 14 jours et 4 jours : on recherche une différence inférieure ou égale à 2 Shore A pour le dessous pion.

### Test d'adhérence du moule en élastomère silicone au master à reproduire :

Des masters à dupliquer de différentes matières ont été utilisés afin d'évaluer le développement de l'adhérence de l'élastomère silicone lors de la préparation du moule négatif.

Les matières évaluées ont été : un plastique organique à savoir le polyuréthane et le plâtre. Pour chacune des matières, le master utilisé est un parallélépipède rectangle ayant une hauteur de 8 mm, une largeur de 35 mm et une longueur de 35mm. La surface de cette pièce est lisse.

Après 24 heures, l'adhérence du moule négatif sur le master est évaluée qualitativement lors du démoulage. Le démoulage du master est réalisé en décollant chaque bord du moule négatif, l'un après l'autre de manière à évaluer la résistance au démoulage.

S'il n'y a aucune résistance, l'adhérence est évaluée à 0.

Si une légère force doit être appliquée afin de sortir le master, l'adhérence est évaluée +.

Si une force importante doit être appliquée afin de sortir le master, mais qu'il est possible de sortir le master sans déchirer le moule silicone, l'adhérence est évaluée ++.

Lorsqu'il n'est pas possible de démouler le master sans déchirer le moule silicone, l'adhérence est évaluée +++.

Une note de 0 ou + est recherchée pour l'utilisation du moule négatif pour préparer des répliques.

### Test de démoulage :

Le master utilisé est un parallélépipède rectangle en métal ayant une hauteur de 8 mm, une largeur de 35 mm et une longueur de 35mm. La surface de cette pièce est lisse.

Les moules d'essai ont été réalisés dans un procédé de coulée de la formulation pré-mélangée (mélange de la partie P1 et de la partie P2) sur la pièce métallique déposée au fond d'un pot.

Après 24 heures, le master est démoulé.

Six jours après le démoulage du master, les moules négatifs sont chargés pour la première fois de résine de coulée de polyuréthane (matériau de reproduction).

La résine de polyuréthane utilisée pour évaluer la résistance du moule négatif en élastomère silicone est la résine Fastcast F190 d'Axson. Cette résine se présente sous la forme d'un produit bi-composant qui une fois le mélange effectué à température ambiante (mélange 1 :1) a un pot-life de 8 minutes et peut être démoulée après 90 minutes.

Par la suite, entre 3 et 5 répliques en polyuréthane sont réalisées chaque jour, chaque fois avec environ 12,5 g de résine de polyuréthane. Les répliques moulées en résine sont à chaque fois laissées dans le moule négatif en élastomère silicone pendant 1,5 heures minimum pour obtenir une polymérisation complète.

Le démoulage des répliques moulées en résine est réalisé en décollant chaque bord du moule négatif en élastomère silicone, l'un après l'autre de manière à évaluer la résistance au démoulage.

Le nombre de reproductions qui ont été obtenues sans dégradation du moule négatif en élastomère silicone (i.e. sans arrachement des petits morceaux de silicones) est présenté dans un des tableaux ci-dessous. Cela permet de comparer la résistance au polyuréthane des différents moules négatifs en élastomère silicone.

Les résultats des différents tests effectués sont les suivants :

**Tableau 6 : L'aspect de la partie P2 est observé visuellement.**

| **Référence** | **Nature du catalyseur** | **Observations partie P2** |
|---|---|---|
| **P2-C1** | **Néodécanoate de diméthylétain** | Monophasique liquide transparent. |
| **P2-C2** | **Decyl amine** | Monophasique liquide transparent. |
| **P2-C3** | **Dodecyl amine** | Biphasique liquide/solide |
| **P2-1** | **Diisononyl amine** | Monophasique liquide transparent. |
| **P2-2** | **Diisononyl amine** | Monophasique liquide transparent. |
| **P2-3** | **Dioctyl amine** | Monophasique liquide transparent. |
| **P2-4** | **Dibutyl amine** | Monophasique liquide transparent. |
| **P2-5** | **Dihexyl amine** | Monophasique liquide transparent. |
| **P2-6** | **Didécyl amine** | Monophasique liquide transparent. |
| **P2-7** | **Didodécyl amine** | Biphasique liquide/solide |

**Tableau 7 : Cinétique de réticulation**

| **Référence** | **Nature du catalyseur** | **Pot-life (min**) | **DSA** | | | | | | **Post-curing** | **DSA 24h x 100 / DSA 14j(%)** |
|---|---|---|---|---|---|---|---|---|---|---|
| | | | **24h** | | **4j** | | **14j** | | | |
| | | | **Dessous** | **Dessus** | **Dessous** | **Dessus** | **Dessous** | **Dessus** | | |
| **C1** | **Néodécanoate de diméthylétain** | 193 | 19 | 23 | **27** | 28 | 28 | 28 | + 1 | **68** |
| **C2** | **Decyl amine** | 669 | **Pas réticulé** | **NM.** | **Trop mou. NM** | **Trop mou. NM** | 16 | 16 | **A 24 heures, pas encore réticulé.** | |
| **C3** | **Dodecyl amine** | 669 | **Pas réticulé** | **NM.** | **Trop mou.** | **NM.** | 14 | 14 | **A 24 heures, pas encore réticulé.** | |
| **Ex.1** | **Diisononyl amine** | 90 | 19 | 20 | **24** | 25 | 26 | 26 | +2 | 73 |
| **Ex.2** | **Diisononyl amine** | 120 | 18 | 18 | 23 | 24 | 24 | 25 | +1 | 75 |
| **Ex.3** | **Dioctyl amine** | 125 | 18 | 17 | 23 | 24 | 25 | 26 | +2 | 72 |
| **Ex.4** | **Dibutyl amine** | 68 | 18 | 16 | 23 | 22 | 25 | 23 | +2 | 72 |
| **Ex.5** | **Dihexyl amine** | 134 | 17 | 17 | 23 | 23 | 24 | 25 | +1 | 71 |
| **Ex.6** | **Didécyl amine** | 109 | 17 | 18 | 23 | 24 | 25 | 26 | +2 | 68 |
| **Ex.7** | **Didodécyl amine** | 92 | 19 | 20 | 24 | 25 | 25 | 26 | +1 | 76 |
| **Ex.10** | **Didécyl amine** | 124 | 17 | 17 | 23 | 24 | 25 | 26 | +2 | 68 |

**Tableau 8 : Résultats du test d'évaluation de l'adhérence du moule négatif en élastomère silicone sur différents masters**

| **Référence moule négatif** | **Composition mise en œuvre lors de la fabrication du moule négatif** | **Nature du catalyseur mis en œuvre dans la composition** | **Adhérence moule négatif en Silicone** | |
|---|---|---|---|---|
| | | | **sur master en polyuréthane (PU)** | **sur master en plâtre** |
| **MN C1** | **C1** | **Néodécanoate de diméthylétain** | 0 | 0 |
| **MN C2** | **C2** | **Décyl amine** | +++ | +++ |
| **MN C3** | **C3** | **Dodécyl amine** | +++ | +++ |
| **MN 2** | **Ex.2** | **Diisononyl amine** | 0 | 0 |
| **MN 3** | **Ex.3** | **Dioctyl amine** | + | 0 |
| **MN 5** | **Ex.5** | **Dihexyl amine** | + | 0 |
| **MN 8** | **Ex.8** | **Dibutyl amine** | ++ | +++ |
| **MN 10** | **Ex.10** | **Didécyl amine** | 0 | 0 |

**Tableau 9 : Nombre de cycles successifs moulage/démoulage (durabilité moule en élastomère silicone)**

| **Référence moule négatif** | **Composition mise en œuvre lors de la fabrication du moule négatif** | **Nature du catalyseur mis en œuvre dans la composition** | **Nombre de moulages/démoulages successifs d'articles moulés en PU** |
|---|---|---|---|
| **MN C1** | **C1** | **Néodécanoate de diméthylétain** | 37 |
| **MN C2** | **C2** | **Décyl amine** | accrochage sur master-non évalué |
| **MN C3** | **C3** | **Dodécyl amine** | accrochage sur master-non évalué |
| **MN 1** | **Ex.1** | **Diisononyl amine** | 46 |
| **MN 2** | **Ex.2** | **Diisononyl amine** | 41 |
| **MN 3** | **Ex.3** | **Dioctyl amine** | 47 |
| **MN 8** | **Ex.8** | **Dibutyl amine** | 58 |
| **MN 9** | **Ex.9** | **Dihexyl amine** | 52 |
| **MN 11** | **Ex.11** | **Diisononyl amine** | 54 |

En conclusion, les catalyseurs mis en œuvre dans les compositions silicones utilisées lors de la préparation de moules en élastomère silicone selon l'invention permettent simultanément d'obtenir :
- un pot-life suffisamment long pour mettre en œuvre le mélange partie P1 + partie P2 (entre 20 et 200 mn),
- une réticulation « rapide » (Post-curing de maximum +2 et ratio DSA 24h x 100 / DSA 14j > 68%),
- des moules en élastomère silicone obtenus par le procédé selon l'invention qui permettent de mouler un nombre conséquent de pièces par exemple en polyuréthane (nombre de cycles successifs de moulages/démoulages > 37),
et cela en l'absence de composés à base d'étain.

Pour satisfaire aux conditions supplémentaires que la partie contenant le catalyseur soit homogène (monophasique transparente) et que les moules négatifs en élastomère silicone obtenus par le procédé selon l'invention n'adhèrent pas au master et cela en l'absence d'agent de démoulage appliqué sur le master à reproduire, les catalyseurs de polycondensation C répondent à la formule générale (I):

(R")₂NH

dans laquelle les symboles R", identiques ou différents représentent des radicaux hydrocarbonés aliphatiques ayant de 6 à 10 atomes de carbone.

## Revendications

1. Procédé de préparation d'un moule négatif **MN** en élastomère silicone utile à la fabrication d'articles moulés en différents matériaux de reproduction comprenant les étapes a) à d) suivantes :
a) on prépare une composition polyorganosiloxane **X** réticulable en élastomère par des réactions de polycondensation, ne contenant pas de catalyseur métallique et comprenant:
- une base silicone **B** comprenant au moins une huile α,ω-dihydroxydiorganopolysiloxane **A**, réticulable par réaction de polycondensation, répondant à la formule **(1)** suivante : 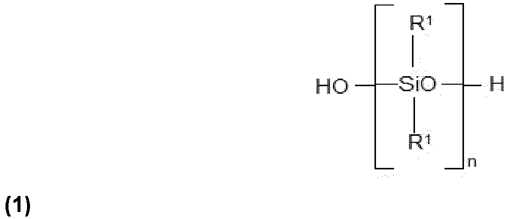 formule dans laquelle :
• les substituants R¹, identiques ou différents, représentent chacun un radical monovalent hydrocarboné saturé ou non en C₁ à C₁₃, substitué ou non substitué, aliphatique, cyclanique ou aromatique et de préférence R¹ est un méthyl ; et
• n a une valeur suffisante pour conférer aux polyorganosiloxane de formule **(1)** une viscosité dynamique à 25°C allant de 10 à 1.000.000 mPa.s, et
- une quantité catalytiquement efficace d'au moins un catalyseur de polycondensation **C**,
b) on applique ladite composition polyorganosiloxane **X** sur un master à dupliquer, éventuellement préalablement recouvert d'un agent de démoulage,
c) on laisse réticuler en présence d'humidité apportée par l'air ambiant ou par addition préalable d'eau ladite composition polyorganosiloxane **X** pour former un moule négatif **MN** en élastomère silicone qui est une empreinte correspondant au contour extérieur du master à dupliquer, et
d) on sépare le moule négatif **MN** en élastomère silicone du master à dupliquer, **caractérisé en ce que** lors de l'étape a) le catalyseur de polycondensation **C** est un composé organique répondant à la formule générale (I):
(R")₂NH
dans laquelle les symboles R", identiques ou différents représentent des radicaux hydrocarbonés aliphatiques de 6 à 10 atomes de carbone.

2. Procédé de moulage de répliques **R** caractérisé en qu'il comprend les étapes a) à d) selon la revendication 1 suivies des étapes e) à h) suivantes :
e) on remplit ce moule négatif **MN** en élastomère silicone avec un matériau de reproduction,
f) on laisse durcir le matériau de reproduction à l'intérieur du moule négatif **MN** en élastomère silicone pour produire une réplique **R** du master à dupliquer,
g) on sépare la réplique **R** du moule négatif MN en élastomère silicone, et
h) éventuellement le moule négatif **MN** en élastomère silicone subit à nouveau les étapes e) à g) pour former une nouvelle réplique **R.**

3. Procédé selon la revendication 1 ou 2 **caractérisé en ce que** lors de l'étape a) le catalyseur de polycondensation **C** répond à la formule générale **(I):**
(R")₂NH
dans laquelle les symboles R", identiques ou différents représentent des radicaux hydrocarbonés aliphatiques ayant de 8 à 10 atomes de carbone.

4. Composition polyorganosiloxane **X** réticulable en élastomère par des réactions de polycondensation, ne contenant pas de catalyseur métallique et comprenant:
- une base silicone **B** comprenant au moins une huile α,ω-dihydroxydiorganopolysiloxane **A** réticulable par réaction de polycondensation de manière à former un élastomère silicone, répondant à la formule **(1)** suivante : 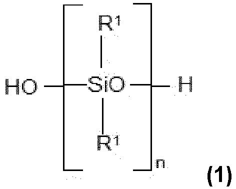 formule dans laquelle :
• les substituants R¹, identiques ou différents, représentent chacun un radical monovalent hydrocarboné saturé ou non en C₁ à C₁₃, substitué ou non substitué, aliphatique, cyclanique ou aromatique et de préférence R¹ est un méthyl ; et
• n a une valeur suffisante pour conférer aux polyorganosiloxane de formule **(1)** une viscosité dynamique à 25°C allant de 10 à 1.000.000 mPa.s, et
- une quantité catalytiquement efficace d'au moins un catalyseur de polycondensation **C**, **caractérisé en ce que** le catalyseur de polycondensation **C** est un composé organique répondant à la formule générale **(I):**
(R")₂NH
dans laquelle les symboles R", identiques ou différents représentent des radicaux hydrocarbonés aliphatiques ayant de 6 à 10 atomes de carbone.

5. Moule négatif en élastomère silicone **MN** obtenu à l'issue de l'étape d) du procédé tel que décrit selon la revendication 1 ou 2.

6. Utilisation d'un moule négatif en élastomère silicone **MN** obtenu à l'issue de l'étape d) du procédé tel que décrit selon la revendication 1 ou 2 pour la fabrication d'articles moulés.

## Patentansprüche

1. Verfahren zur Herstellung einer Negativform **MN** aus Silikonelastomer zur Verwendung bei der Fertigung von Formkörpern aus verschiedenen Reproduktionsmaterialien, umfassend die folgenden Schritte a) bis d):
a) man stellt eine durch Polykondensationsreaktionen zu einem Elastomer vernetzbare Polyorganosiloxanzusammensetzung **X** her, die keinen Metallkatalysator enthält und Folgendes umfasst:
- eine Silikonbasis **B,** umfassend mindestens ein durch Polykondensationsreaktion vernetzbares α,ω-Dihydroxydiorganopolysiloxanöl **A,** das der folgenden Formel **(1)** entspricht: 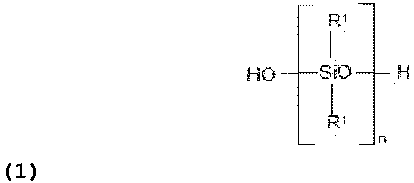 wobei in der Formel:
• die Substituenten R¹ gleich oder verschieden sind und jeweils für einen aliphatischen, cyclanischen oder aromatischen substituierten oder unsubstituierten, gesättigten oder ungesättigten einwertigen C₁- bis C₁₃-Kohlenwasserstoffrest stehen und R¹ vorzugsweise Methyl ist und
• n einen Wert hat, der ausreicht, um dem Polyorganosiloxan der Formel **(1)** eine dynamische Viskosität bei 25 °C im Bereich von 10 bis 1.000.000 mPa.s zu verleihen, und
- eine katalytisch wirksame Menge mindestens eines Polykondensationskatalysators **C**,
b) man bringt die Polyorganosiloxanzusammensetzung **X** auf eine zu duplizierende, gegebenenfalls vorher mit einem Formtrennmittel beschichtete Urform auf,
c) man lässt die Polyorganosiloxanzusammensetzung **X** in Gegenwart von Feuchtigkeit, die durch die Umgebungsluft oder durch vorherige Zugabe von Wasser bereitgestellt wird, vernetzen, was eine Negativform **MN** aus Silikonelastomer ergibt, bei der es sich um einen der äußeren Kontur der zu duplizierenden Urform entsprechenden Abdruck handelt, und
d) man trennt die Negativform **MN** aus Silikonelastomer von der zu duplizierenden Urform,
**dadurch gekennzeichnet, dass** es sich in Schritt a) bei dem Polykondensationskatalysator **C** um eine organische Verbindung handelt, die der folgenden allgemeinen Formel (I) entspricht:
(R")₂NH
wobei die Symbole R" gleich oder verschieden sind und für aliphatische Kohlenwasserstoffreste mit 6 bis 10 Kohlenstoffatomen stehen.

2. Verfahren zum Abformen von Replikaten **R, dadurch gekennzeichnet, dass** es die Schritte a) bis d) nach Anspruch 1 gefolgt von den folgenden Schritten e) bis h) umfasst:
e) man füllt die Negativform **MN** aus Silikonelastomer mit einem Reproduktionsmaterial,
f) man lässt das Reproduktionsmaterial in der Negativform **MN** aus Silikonelastomer härten, was ein Replikat **R** der zu duplizierenden Urform ergibt,
g) man trennt das Replikat **R** von der Negativform **MN** aus Silikonelastomer, und
h) gegebenenfalls wird die Negativform **MN** aus Silikonelastomer erneut den Schritten e) bis g) unterworfen, um ein neues Replikat **R** zu bilden.

3. Verfahren nach Anspruch 1 oder 2, **dadurch gekennzeichnet, dass** in Schritt a) der Polykondensationskatalysator **C** der allgemeinen Formel **(I)** entspricht:
(R")₂NH
wobei die Symbole R" gleich oder verschieden sind und für aliphatische Kohlenwasserstoffreste mit 8 bis 10 Kohlenstoffatomen stehen.

4. Polyorganosiloxanzusammensetzung **X,** die durch Polykondensationsreaktionen zu einem Elastomer vernetzbar ist, keinen Metallkatalysator enthält und Folgendes umfasst:
- eine Silikonbasis **B,** umfassend mindestens ein durch Polykondensationsreaktion vernetzbares α,ω-Dihydroxydiorganopolysiloxanöl **A,** das der folgenden Formel **(1)** entspricht: 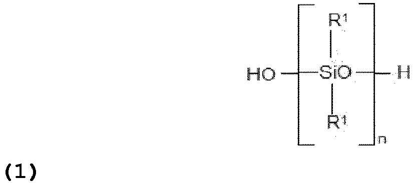 wobei in der Formel:
• die Substituenten R¹ gleich oder verschieden sind und jeweils für einen aliphatischen, cyclanischen oder aromatischen substituierten oder unsubstituierten, gesättigten oder ungesättigten einwertigen C₁- bis C₁₃-Kohlenwasserstoffrest stehen und R¹ vorzugsweise Methyl ist und
• n einen Wert hat, der ausreicht, um dem Polyorganosiloxan der Formel **(1)** eine dynamische Viskosität bei 25 °C im Bereich von 10 bis 1.000.000 mPa.s zu verleihen, und
- eine katalytisch wirksame Menge mindestens eines Polykondensationskatalysators **C**, **dadurch gekennzeichnet, dass** es sich bei dem Polykondensationskatalysator **C** um eine organische Verbindung handelt, die der folgenden allgemeinen Formel **(I)** entspricht:
(R")₂NH
wobei die Symbole R" gleich oder verschieden sind und für aliphatische Kohlenwasserstoffreste mit 6 bis 10 Kohlenstoffatomen stehen.

5. Negativform **MN** aus Silikonelastomer, erhalten am Ende von Schritt d) des Verfahrens gemäß Anspruch 1 oder 2.

6. Verwendung einer am Ende von Schritt b) des Verfahrens gemäß Anspruch 1 oder 2 erhaltenen Negativform **MN** aus Silikonelastomer zur Fertigung von Formkörpern.

## Claims

1. Method for preparing a silicone elastomer negative mould **MN** which is of use in the manufacture of moulded articles made of various reproduction materials, comprising the following steps a) to d):
a) preparing a polyorganosiloxane composition **X** which can be crosslinked to produce an elastomer by polycondensation reactions, not containing a metal catalyst and comprising:
- a silicone base **B** comprising at least one α,ω-dihydroxydiorganopolysiloxane oil **A,** which can be crosslinked by polycondensation reaction, corresponding to formula **(1)** below: 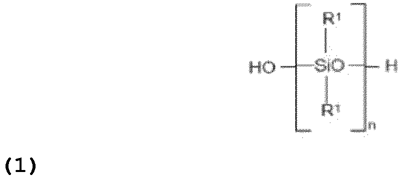 in which formula:
• the substituents R¹, which may be identical or different, each represent a saturated or unsaturated, substituted or unsubstituted, aliphatic, cyclanic or aromatic, C₁ to C₁₃ monovalent hydrocarbon radical and preferably R¹ is a methyl; and
• n has a value sufficient to confer on the polyorganosiloxane of formula **(1)** a dynamic viscosity at 25°C ranging from 10 to 1 000 000 mPa.s, and
- a catalytically effective amount of at least one polycondensation catalyst **C**,
b) applying said polyorganosiloxane composition **X** to a master to be duplicated, optionally covered beforehand with a mould-release agent,
c) allowing said polyorganosiloxane composition **X** to crosslink in the presence of moisture provided by ambient air or by prior addition of water, so as to form a silicone elastomer negative mould **MN** which is an imprint corresponding to the outer contour of the master to be duplicated, and
d) separating the silicone elastomer negative mould **MN** from the master to be duplicated,
**characterized in that**, during step a), the polycondensation catalyst **C** is an organic compound corresponding to general formula (I):
**(R")₂NH**
in which the symbols R", which may be identical or different, represent aliphatic hydrocarbon radicals containing from 6 to 10 carbon atoms.

2. Method for moulding replicas **R**, **characterized in that** it comprises steps a) to d) according to Claim 1, followed by the following steps e) to h):
e) filling this silicone elastomer negative mould **MN** with a reproduction material,
f) allowing the reproduction material to cure inside the silicone elastomer negative mould **MN** so as to produce a replica **R** of the master to be duplicated,
g) separating the replica **R** from the silicone elastomer negative mould **MN,** and
h) optionally subjecting the silicone elastomer negative mould **MN** to steps e) to g) again, so as to form a new replica **R.**

3. Method according to Claim 1 or 2, **characterized in that**, during step a), the polycondensation catalyst **C** corresponds to general formula **(I):**
**(R")₂NH**
in which the symbols R", which may be identical or different, represent aliphatic hydrocarbon radicals having from 8 to 10 carbon atoms.

4. Polyorganosiloxane composition **X** which can be crosslinked to produce an elastomer by polycondensation reactions, not containing a metal catalyst and comprising:
- a silicone base **B** comprising at least one α,ω-dihydroxydiorganopolysiloxane oil **A** which can be crosslinked by polycondensation reaction so as to form a silicone elastomer, corresponding to formula **(1)** below: 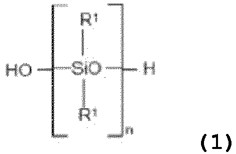 in which formula:
• the substituents R¹, which may be identical or different, each represent a saturated or unsaturated, substituted or unsubstituted, aliphatic, cyclanic or aromatic, C₁ to C₁₃ monovalent hydrocarbon radical and preferably R¹ is a methyl; and
• n has a value sufficient to confer on the polyorganosiloxane of formula **(1)** a dynamic viscosity at 25°C ranging from 10 to 1 000 000 mPa.s, and
- a catalytically effective amount of at least one polycondensation catalyst **C**, **characterized in that** the polycondensation catalyst **C** is an organic compound corresponding to general formula **(I):**
(R")₂NH
in which the symbols R", which may be identical or different, represent aliphatic hydrocarbon radicals having from 6 to 10 carbon atoms.

5. Silicone elastomer negative mould **MN** obtained at the outcome of step d) of the method as described according to Claim 1 or 2.

6. Use of a silicone elastomer negative mould **MN** obtained at the outcome of step d) of the method as described according to Claim 1 or 2, for the manufacture of moulded articles.
